# EUROPÄISCHE PATENTANMELDUNG

(11) **EP 2 596 900 A1**
(43) Veröffentlichungstag der Anmeldung: **29.05.2013**
(21) Anmeldenummer: 12194648.7
(22) Anmeldetag: 28.11.2012
(51) Int. Cl.: B23K 26/06

(54) **Vorrichtung und Verfahren zur Materialbearbeitung**

(30) Priorität: 28.11.2011 DE 102011087251; 10.02.2012 DE 102012202060
(71) Anmelder: Laser- und Medizin-Technologie GmbH Berlin, 14195 Berlin (DE)
(72) Erfinder: Ashkenasi, David, Dr., 12209 Berlin (DE); Müller, Norbert, Dipl.-Ing., 15569 Woltersdorf (DE)
(74) Vertreter: Eisenführ, Speiser & Partner

(57) **Zusammenfassung**

Die Erfindung betrifft eine Vorrichtung zur Materialbearbeitung und ein zugehöriges Verfahren. Dabei werden ein Anregungslaserstrahl (310) und ein Bearbeitungslaserstrahl (210) auf ein transparentes Werkstück (120) gerichtet, wobei erst bei Überlappung der beiden Laserstrahlen eine bleibende Materialbearbeitung erfolgt. Die Vorrichtung (100) zur Materialbearbeitung, insbesondere zum Materialabtrag, Verschweißen oder zum Ändern von Materialeigenschaften transparenter Werkstücke (120) weist einen Bearbeitungslaser (200) auf, welcher im Betrieb einen Bearbeitungslaserstrahl (210) emittiert, wobei der Bearbeitungslaser mit einer ersten Positioniervorrichtung (140 150) verbunden ist, welche den Bearbeitungslaserstrahl im Betrieb mittels geeigneter Optiken (220, 230) relativ zu einem Werkstück (120) positioniert. Die Vorrichtung (100) zur Materialbearbeitung weist ferner einen Anregungslaser (300) auf, welcher im Betrieb einen Anregungslaserstrahl (310) emittiert, der alleine keine bleibende Materialveränderung bewirkt, wobei der Anregungslaser (300) mit einer zweiten Positioniervorrichtung (141, 151) verbunden ist, welche den Anregungslaserstrahl im Betrieb mittels geeigneter Optiken (320, 330) relativ zu einem Werkstück und dem Bearbeitungslaserstrahl in diesem Werkstück positioniert. Die erste Positioniervorrichtung (140, 150) und die zweite Positioniervorrichtung (141, 151) sind so ausgebildet, dass der Anregungslaserstrahl (310) im Betrieb ein definiertes Anregungsvolumen (340) induziert, in dem eine Materialbearbeitung des Werkstücks (120) mit dem Bearbeitungslaserstrahl (210) erfolgt.

## Beschreibung

Die Erfindung betrifft eine Vorrichtung zur Materialbearbeitung, insbesondere zum Materialabtrag, Verschweißen bzw. Verbinden oder zur gezielten Veränderung von Materialeigenschaften transparenter Werkstücke.

Laser werden heutzutage vielfältig zur Bearbeitung von Materialien eingesetzt. Durch die Bestrahlung mit einem Laser kann es in einem zu bearbeitenden Werkstück zu gewissen gewünschten Materialreaktionen kommen. Bei transparenten Werkstoffen kann mit Laserstrahlung eine solche Materialreaktion beispielsweise ein Materialabtrag, eine Dichteänderung oder eine Phasenänderung an Grenzflächen bedeuten. Ein Materialabtrag findet dabei typischerweise an der Werkstoffoberfläche statt und dient der Strukturierung eines Werkstücks, so dass beispielsweise eine bestimmte Form des Werkstücks erreicht werden kann oder dass die Oberfläche mit einem Muster strukturiert werden kann. Dichteänderungen finden typischerweise im Inneren des Werkstoffs statt und dienen beispielsweise der Markierung eines bestimmten Bereichs im Werkstück oder der Einbringung von Sollbruchstellen. Eine Dichteänderung im Volumen dient auch zur gezielten Einstellung eines Brechungsindex oder zum kontrollierten Einbringen von inneren Spannungen. Phasenänderungen finden typischerweise an Grenzflächen statt und dienen der Erzeugung einer Schmelze zum Laserschweißen oder zum Verdampfen einer dünnen Schicht im Inneren eines Schichtsystems. Damit können beispielsweise zwei Werkstücke entlang einer Grenzfläche miteinander verschweißt werden.

Bei einer Materialbearbeitung mittels Laser wird typischerweise Energie aus einem Laserstrahl absorbiert. Dies führt zu einer zumindest lokalen Erwärmung des Materials und induziert einen Phasenübergang zur flüssigen oder gasförmigen Phase. In einer flüssigen Phase können sich beispielsweise benachbarte unterschiedliche Materialien vermischen. Wenn sich die flüssige Phase wieder abkühlt, wird diese wieder Erstarren und dabei eine andere Gefügestruktur als vor der Bearbeitung einnehmen. Wenn das Material in eine gasförmige Phase überführt wird, kann es unmittelbar verdampfen, wodurch das Material von der Oberfläche abgetragen werden kann.

Es ist wünschenswert, eine verbesserte Kontrolle über die gewünschte Materialreaktion, Dichte- und Phasenänderung zu erhalten, um eine beispielsweise genauere oder effizientere Materialbearbeitung transparenter Werkstoffe vornehmen zu können.

Dies wird gemäß einem ersten Aspekt der Erfindung durch eine Vorrichtung zur Materialbearbeitung gemäß Anspruch 1 erreicht. Gemäß einem zweiten Aspekt der Erfindung wird dies durch ein Verfahren zur Materialbearbeitung gemäß Anspruch 11 erreicht. Vorteilhafte Ausgestaltungen können beispielsweise den Unteransprüchen entnommen werden.

Gemäß dem ersten Aspekt betrifft die Erfindung eine Vorrichtung zur Materialbearbeitung, insbesondere zum Materialabtrag, Verschweißen oder zum Ändern von Materialeigenschaften transparenter Werkstücke. Die Vorrichtung weist einen Bearbeitungslaser auf, welcher im Betrieb einen Bearbeitungslaserstrahl emittiert. Der Bearbeitungslaser ist mit einer ersten Positioniervorrichtung verbunden, welche den Bearbeitungslaserstrahl im Betrieb relativ zu einem Werkstück positioniert. Die Vorrichtung zur Materialbearbeitung weist ferner einen Anregungslaser auf, welcher im Betrieb einen Anregungslaserstrahl emittiert, der allein keine bleibende Materialveränderung bewirkt. Der Anregungslaser ist mit einer zweiten Positioniervorrichtung verbunden, wobei die erste Positioniervorrichtung und die zweite Positioniervorrichtung so ausgebildet sind, dass der Anregungslaserstrahl im Betrieb ein definiertes Bearbeitungsvolumen anregt, indem eine Materialbearbeitung des Werkstücks mit dem Bearbeitungslaserstrahl erfolgt.

Die Vorrichtung weist eine Anregungsquelle auf, der die Voraussetzung zur Laserbearbeitung insbesondere transparenter Werkstoffe signifikant verbessert. Die Anregungsquelle ist vorzugsweise ein Anregungslaser, der im Betrieb einen (vorzugsweise kurzgepulsten) Anregungslaserstrahl emittiert. Die Vorrichtung weist außerdem einen Bearbeitungslaser auf, welcher im Betrieb einen Bearbeitungslaserstrahl emittiert. Die Anregungsquelle und der Bearbeitungslaser sind mit jeweils einer Positioniervorrichtung verbunden, welche den Bearbeitungslaserstrahl im Betrieb relativ zu einem Werkstück positioniert. Der Anregungslaserstrahl erlaubt es, die Bedingungen zur Induzierung einer Materialveränderung für den Bearbeitungslaserstahl hinsichtlich Effizienz und/oder Präzision zu verbessern.

Ein Anregungslaser kann beispielsweise ein kleines, definiertes Volumen des Werkstücks gezielt anregen, so dass nachfolgend ein weniger genau fokussierter Bearbeitungslaser (nur) genau in dem angeregten Volumen (nachfolgend auch als Anregungsvolumen bezeichnet) eine Materialbearbeitung im Sinne von Abtrag, Dichteänderung, Phasenänderung oder eine andere bleibende Gefügeänderung im Werkstoff des Werkstücks bewirkt. Eine genaue Begrenzung des Anregungsvolumen, in dem es nachfolgend mit Hilfe des Bearbeitungslaserstrahl zur gewünschten Materialveränderung kommt, ist aufgrund der relativ geringeren Energie des Anregungslaserstrahls leichter möglich als mit einem relativ energiereicheren Bearbeitungslaserstrahl. Daraus ergibt sich der Vorteil, dass letzterer bei der erfindungsgemäßen Vorrichtung und dem erfindungsgemäßen Verfahren nicht so genau fokussiert zu werden braucht, ohne dass dies zu Ungenauigkeiten bei der Materialbearbeitung führen muss.

Die Vorrichtung gemäß dem ersten Aspekt der Erfindung ermöglicht somit eine besonders genaue und effiziente Bearbeitung des Werkstücks, da die hohe Präzision eines Anregungslasers mit der Bearbeitungseffizienz eines Bearbeitungslasers kombiniert werden kann. Dies wird dadurch ermöglicht, dass der Anregungslaserstrahl zwar bereits ein freies Elektronengas in dem Werkstück erzeugt, das jedoch erst dann zu einer bleibenden Materialveränderung führt, wenn der Anregungslaserstrahl mit dem Bearbeitungslaserstrahl überlappt. Außerdem kann der zu bearbeitende Bereich durch räumlichen und zeitlichen Überlapp von zwei Laserstrahlen eingestellt werden, sofern diese nicht kollinear geführt werden. Dies ermöglicht es, den zu bearbeitenden Bereich exakt dreidimensional auszuwählen.

Die Erfindung schließt die Erkenntnis ein, dass es - um eine Materialreaktion zu induzieren - erforderlich ist, mit Hilfe des Laserlichts ein freies Elektronengas mit ausreichender Dichte und Energieverteilung im zu bearbeitenden Material zu erzeugen. Ein solches liegt dann vor, wenn Elektronen an der betreffenden Stelle vorhanden sind, welche nicht mehr atomar oder molekular gebunden sind, sondern sich frei im Festkörper bewegen können. In einem einfachen, aber weit verbreiteten energetischen Modell für Festkörper befinden sich die freien Elektronen im Leitungsband, während die gebundenen Elektronen im Valenzband behaftet sind. Für Dielektrika bzw. bei den meisten transparenten Werkstoffen liegt zwischen Valenz- und Leitungsband eine Energielücke, die überwunden werden muss, damit gebundene Elektronen in das Leitungsband überführt werden können.

Es sei verstanden, dass für unterschiedliche Materialien und unterschiedliche gewünschte Materialreaktionen unterschiedliche Dichten von freien Elektronen notwendig sind, so dass hier keine allgemein gültige Grenze angegeben werden kann, ab welcher ein freies Elektronengas vorliegt und ab welcher Dichte ein freies Elektronengas zur Materialbearbeitung ausreicht.

Zum Zweck der Materialbearbeitung werden typischerweise Bearbeitungslaser eingesetzt. Diese sind beispielsweise industrietaugliche Lasersysteme, die Laserlicht mit hoher mittlerer Leistung oder hoher Pulsenergie erzeugen und dabei verhältnismäßig preiswert sind. Diese Lasersysteme werden typischerweise hauptsächlich für die Bearbeitung von Metallen eingesetzt. Häufig weisen sie eine Wellenlänge zwischen 1 um bei Festkörperlasersystemen und 10 µm bei CO₂-Gaslasern auf. Die Pulsdauer beträgt typischerweise etwa 1 µs bis Dauerstrich (cw). Es gibt jedoch auch Bearbeitungslaser mit Pulsdauern zwischen 1 ns und 100 ns.

Im Falle der vorliegenden Erfindung bewirkt der von dem Bearbeitungslaser emittierte Bearbeitungslaserstrahl alleine keine bleibende Materialveränderung. Dies bedeutet, dass eine in dem Werkstück absorbierte Energie, welche vom Bearbeitungslaserstrahl beim Durchtritt durch das Werkstück abgegeben wird, nicht ausreicht, um eine bleibende Veränderung des Werkstücks auf atomarer Ebene hervorzurufen. Welche Kombinationen von Parametern wie Wellenlänge, Pulsdauer oder Energie zulässig sind, um keine bleibende Materialveränderung zu bewirken, hängt vom zu bearbeitenden Werkstück ab.

Mit der vorliegenden Erfindung wird ein Verfahren vorgestellt, bei dem der Bearbeitungslaser durch einen zweiten Laserstrahl eines Anregungslasers unterstützt wird. Der Anregungslaser hat die Aufgabe, das freie Elektronengas zu erzeugen, um die gewünschte Materialreaktion mit dem Bearbeitungslaser zu ermöglichen.

Der Anregungslaserstrahl definiert durch die Strecke, durch welche er durch das Werkstück durchtritt, ein Anregungsvolumen. Dieses Anregungsvolumen ist dasjenige, welches erst dadurch bearbeitet werden kann, dass sich der Bearbeitungslaserstrahl mit dem Anregungslaserstrahl überlappt, um im Anregungsvolumen zusätzliche Lichtenergie hineinzupumpen.

Vorzugsweise wird der Anregungslaserstrahl so gewählt, dass dieser alleine im Werkstück noch keine Materialbearbeitung im Sinne von Abtrag, Dichteänderung, Phasenänderung oder eine andere bleibende Gefügeänderung im Werkstoff induziert. Auch der Bearbeitungslaserstrahl kann vorzugsweise so gewählt werden, dass dieser alleine im Werkstück keine Materialbearbeitung im Sinne von Abtrag, Dichteänderung, Phasenänderung oder eine andere bleibende Gefügeänderung im Werkstoff reduziert. Die Prozessparameter von Anregungs- und Bearbeitungslaserstrahlung werden vorzugsweise so gewählt, dass diese gemeinsam die Materialreaktion im Sinne der gewünschten Werkstoffbearbeitung bewirken. Diese Vorgehensweise liefert die beste Voraussetzung für eine Kontrolle, Steuerung und sogar die Regelung des neuen Verfahrens.

In dem Bereich, in welchem die Laserstrahlen des Anregungs- und Bearbeitungslasers überlappen, reicht die von den beiden Laserstrahlquellen an das Material abgegebene Energie aus, um eine Veränderung auf atomarer Ebene hervorzurufen. Die Grundlage hierfür kann beispielsweise ein freies Elektronengas sein, welches in dem zu bearbeitenden Werkstück angeregt wird. Freie Elektronen (und mit diesen verbundene freie Löcher) können in transparenten Werkstoffen (bzw. Isolatormaterialien) grundsätzlich ein wesentlich breiteres Spektrum von Energie absorbieren, da sie nicht an bestimmte Energieeigenwerte gebunden sind. Hauptproblem bei der Laserbearbeitung von transparenten Werkstoffen ist, dass die Konzentration von freien Elektronen im Ausgangszustand, also vor der Laseranregung, recht klein ist.

Der Laserstrahl, der für die Bearbeitung von transparenten Werkstoffen eingesetzt wird, muss - im Gegensatz zu metallischen Werkstoffen, bei denen bekanntermaßen freie Elektronen in hoher Konzentration vorliegen - gleich zwei Bedingungen erfüllen:
1. Notwendige Bedingung: Möglichst viele freie Elektronen erzeugen,
2. Hinreichende Bedingung: Die Laserenergie in das freie Elektronengas pumpen

Hauptproblem bei der bisherigen Vorgehensweise mit einem Bearbeitungslaserstrahl ist, dass dieser aufgrund der vorhandenen Lasersysteme und der damit verbundenen Parameter nicht beide der oben genannten Bedingungen zur Materialbearbeitung transparenter Werkstoffe optimal erfüllen kann. Entweder der Bearbeitungslaserstrahl verfügt über eine hohe Spitzenpulsleistung, um vorzugsweise Bedingung 1 zu erfüllen, dann fehlt typischerweise jedoch eine hohe Pulsenergie für die effiziente Ausführung der 2. Bedingung. Oder der Bearbeitungslaserstrahl besitzt eine hohe Pulsenergie, dafür fehlt aufgrund der längeren Pulsdauer die Spitzenpulsleistung, um die notwendige Bedingung 1 zu lösen.

Die vorliegende Erfindung löst dieses Problem, indem beim neuen Zwei-Laseransatz, also durch die Einführung eines getrennten Anregungslaserstrahls aus einem Anregungslaser und eines Bearbeitungslaserstrahls aus einem Bearbeitungslaser, die relevanten Parameter zur Erfüllung der oben genannten Bedingungen optimal angepasst werden können. Ein getrenntes Angehen der oben genannten Bedingungen durch zwei verschiedene, abgestimmte Laserstrahlquellen verbessert zudem auch die Kontroll- und Steuerungsmöglichkeiten bei der Laserbearbeitung transparenter Werkstoffe.

Der Anregungslaserstrahl hat die wesentliche Aufgabe, genügend freie Elektronen zu generieren, damit die Energie aus dem Bearbeitungslaserstrahl absorbiert werden kann, was letztendlich zu der gewünschten Materialreaktion, zu einer lokalen Erwärmung des Materials führt. Damit wird das Material entweder lokal aufgeschmolzen, was bei einer nachfolgenden Abkühlung zu einer Gefügeänderung (bis in den mikroskopischen Bereich) führt und damit beispielsweise eine Dichteänderung oder ein Verschweißen zweier Werkstücke hervorrufen kann, oder das Material wird bei ausreichender Erwärmung verdampft, was beispielsweise bei einem Abtrag von Material an die Oberfläche erwünscht ist.

Der Anregungslaser weist bevorzugt eine Wellenlänge zwischen 0,3 und 5 µm auf, um auch ein Anregungsvolumen im Materialinneren des für Wellenlänge der Anregungslaserstrahlung transparenten Werkstoffs zu erhalten. Eine genaue Definition des bevorzugten Wellenlängenbereichs ist materialabhängig, da die optischen Eigenschaften zu berücksichtigen sind. So liegt die untere Wellenlängengrenze für die Erzeugung eines Anregungsvolumens in Innern von Quarz bei ca. 0,2 µm, während für Silizium die untere Wellenlängengrenze eher bei 1,1 µm gesetzt ist. Kürzere Wellenlängen sind bei dem Anregungslaserstrahl zu bevorzugen, da eine kürzere Wellenlänge die Voraussetzungen zur Erzeugung eines freien Elektronengases, also zur Überbrückung der Energielücke zwischen Valenz- und Leitungsband, mittels Multiphotonenabsorption verbessert.

Der Anregungslaser ist bevorzugt kurz gepulst. Um möglichst hohe Spitzenleistungen und somit hohe Anregungsfeldstärken zu erzielen, liegt die Pulsdauer beim Anregungslaser bei unter 10 ns (10⁻⁸ s). Kürzere Pulsdauern im Sub-Nanosekundenbereich, Pikosekunden bzw. Femtosekunden-Laserpulse, werden beim Anregungslaser nachdrücklich bevorzugt, da kürzere Laserpulse bei geringer Pulsenergie hohe Spitzenleistung ermöglichen, was zur Erfüllung der 1. Bedingung, Erzeugung von freien Elektronen, einen unmittelbaren Vorteil liefert. Auch längere Pulse über 10 ns sind vorstellbar, sind aber zur Erfüllung einer hinreichenden Spitzenleistung eher nachteilig.

Die für dieses Verfahren geforderte Spitzenleistung der Einzelpulse eines Anregungslaserstrahls liegt bevorzugt bei über 100 kW. Um diese Spitzenleistung zu erreichen, ist bei einer Pulsbreite von 10 ns eine Einzelpulsenergie von 1 mJ erforderlich. Bevorzugt beträgt die Pulsenergie eines gepulsten Anregungslasers höchstens 1 mJ. Dieser Wert hat sich in der Praxis (im Fall fokussierter Laserstrahlung) als vorteilhaft erwiesen, um zu erreichen, dass das Werkstück nicht schon durch den Anregungslaser alleine, also ohne Zusammenwirkung mit dem Bearbeitungslaser, eine Veränderung erfährt. Bei starker Bündelung des Anregungslaserstrahls auf das Werkstück, beispielsweise um einen Strahldurchmesser im Fokus von 20 µm zu erhalten, sind noch deutlich kleinere Pulsenergien einzusetzen, die bevorzugt im Bereich von 10 nJ bis 1 µJ liegen. Beispielsweise garantiert eine moderate Pulsenergie von 1 µJ eine Spitzenleistung von 100 kW, wenn die vom Anregungslaser generierten Laserpulse gleichzeitig eine Pulsbreite von 10 ps besitzen. Hintergrund für die Bevorzugung möglichst kleiner Pulsenergien bei starker Bündelung des Anregungslaserstrahls auf das Werkstück ist eine Minimierung der Energieflussdichte, die bevorzugt unterhalb einer materialabhängigen Bearbeitungsschwelle liegt. Bevorzugt beträgt die Energieflussdichte eines gepulsten und fokussierten Anregungslasers höchstens 1 J/cm². Dieser Wert hat sich in der Praxis (im Fall fokussierter und gepulster Laserstrahlung) als vorteilhaft erwiesen, um zu erreichen, dass das Werkstück nicht schon durch den Anregungslaser alleine, also ohne Zusammenwirkung mit dem Bearbeitungslaser, eine Veränderung erfährt. Wird beispielsweise ein Anregungslaserpuls mit einer Einzelpulsenergie von 1 µJ auf einen Durchmesser von 20 µm fokussiert, liegt die Energieflussdichte bei 1J/cm².

Es ist jedoch auch denkbar, dass ein ungebündelter, kurz-gepulster Anregungslaserstrahl mit Pulsenergien von mehr als 1 mJ durch das Werkstück geführt wird, um ein möglichst großes Anregungsvolumen im Material zu erwirken, allein direkt eine Bearbeitung auszuführen.

Weiter bevorzugt weist der Anregungslaser eine Repetitionsrate von mindestens 10 kHz, besonders bevorzugt zwischen 100 kHz und 10 MHz, auf. Diese Werte haben sich für die Praxis als vorteilhaft erwiesen, auch hinsichtlich der Verfügbarkeit der geeigneten Lasersysteme für den Anregungslaserstrahl. Aber auch kleinere bzw. höhere Repetitionsraten sind denkbar, wenn die genannten Voraussetzungen hinsichtlich Spitzenleistung und Pulsenergie vom ausgewählten Anregungslasersystem erfüllt werden.

Zum Erzeugen von Laserstrahlen mit einer Wellenlänge von etwa 1 µm stehen insbesondere dioden-gepumpte Festkörperlaser, z.B. Faser-, Scheiben- und Stablaser, zur Verfügung, die zur Erzeugung von kurz-gepulster Laserstrahlung typischerweise eine resonatorinterne Güteschaltung besitzen, vorzugsweise eine technische Ausführungsvariante der Modenkopplung. Eine Umstellung auf eine kürzere Wellenlänge, z.B. 0,5 oder 0,3 µm, kann durch geeignete Frequenzkonverter erzielt werden, die kommerziell verfügbar sind. Die in diesem Verfahren geforderte hohe Spitzenleistung erweist sich dabei noch als zusätzlicher Vorteil, da diese eine möglichst effiziente Frequenzkonversion zu kürzeren Wellenlängen vereinfacht und somit kostengünstiger umsetzbar ist.

Der Bearbeitungslaser weist bevorzugt eine Wellenlänge zwischen 0,3 und 10 µm auf, Grundsätzlich sind längere Wellenlängen bei dem Bearbeitungslaserstrahl zu bevorzugen, da z.B. Laserstrahlung im Infraroten deutlich bessere Voraussetzungen zur Energieeinkopplung in das freie Elektronengas mittels Plasmaabsorption liefert als Laserstrahlung mit kürzerer Wellenlänge im Ultravioletten. In einer bevorzugten Anordnung besitzt der Bearbeitungslaserstrahl eine Wellenlänge von ca. 1 µm.

Zum Erzeugen von Laserstrahlen mit einer Wellenlänge von etwa 1 µm stehen insbesondere Festkörperlaser zur Verfügung. Zum Erzeugen von Laserstrahlen mit einer Wellenlänge von etwa 10 µm dienen insbesondere CO₂-Gaslaser. Die Wahl eines geeigneten Lasers wird durch verschiedene Faktoren beeinflusst, welche beispielsweise durch das zu bearbeitende Werkstück und dessen Absorptionseigenschaften sowie durch die gewünschte Art der Bearbeitung beeinflusst sind.

Gemäß einer Ausführungsvariante ist der Bearbeitungslaser gepulst. Die Pulsdauer beträgt dabei bevorzugt mindestens 10 ns. Besonders bevorzugt wird der Pulsdauerbereich von 100 ns bis 1 µs. Auch längere Pulsdauern bis in den ms-Bereich sind, abhängig von der Aufgabenstellung bei der Bearbeitung, denkbar. Durch eine Verlängerung der Pulsdauer kann der Bearbeitungslaser mit höherer Pulsenergie betrieben werden, um bessere Voraussetzungen für eine erhöhte Energieeinkopplung in das vom Anregungslaser induzierte Anregungsvolumen zu setzen. Durch die Wahl einer ausreichend langen Pulsdauer kann auch dafür gesorgt werden, dass der Bearbeitungslaserstrahl nicht schon alleine, also ohne Zusammenwirken mit dem Anregungslaserstrahl, zu einer Materialbearbeitung führt. Gemäß einer alternativen Ausführungsform ist der Bearbeitungslaser nicht nur gepulst, sondern arbeitet im Dauerstrichbetrieb (cw). In diesem Fall muss auf eine eventuell zu berücksichtigende zeitliche Korrelation von Pulsen des Bearbeitungslaserstrahls und des Anregungslaserstrahls keine Rücksicht mehr genommen werden.

Der Bearbeitungslaser hat vorzugsweise eine Impuls-Spitzenleistung von weniger als 10 kW, also beispielsweise eine um mindestens eine Größenordnung (Zehnerpotenz) kleinere Impuls-Spitzenleistung als der Anregungslaser. Umgekehrt ist die Impulsdauer der Bearbeitungslasers vorzugsweise um mindestens eine Größenordnung (Zehnerpotenz) größer, als die des Anregungslasers. Daraus ergibt sich, dass sich Anregungslaserstrahl und Bearbeitungslaserstrahl in jedem Fall voneinander unterscheiden und beispielsweise von zwei unterschiedlichen Lasern erzeugt werden.

Bearbeitungs- und Anregungslaserstrahl müssen im Werkstück im ausgezeichneten Volumen zur Überlappung gebracht werden, was bevorzugt durch geeignete Optiken, Spiegel und Linsen, ermöglicht wird. Die Positioniervorrichtungen für diese Optiken können derart ausgebildet sein, dass sie sich lediglich durch unmittelbare manuelle Betätigung verstellen lassen. Beispielsweise können hierzu Rändelschrauben verwendet werden, welche über entsprechende Wellen für eine Positions- oder Winkelverstellung des jeweiligen Laserstrahls sorgen können. Alternativ kann jede der Positioniervorrichtungen jeweils auch zur elektrischen Betätigung ausgeführt sein, so dass ein Einstellen von Position und/oder Winkel des Laserstrahls mittels einem oder mehrerer Elektromotoren vorgenommen werden kann. Dies ermöglicht nicht nur eine einfachere Bedienung, sondern auch den Einsatz einer elektronischen Steuerung.

Gemäß einer bevorzugten Ausführungsvariante weist die Vorrichtung ferner eine Steuerung auf, die eine oder beide Positioniervorrichtungen derart steuern kann, dass ein Überlapp der Laserstrahlen relativ zu dem Werkstück festgelegt werden kann. Mit anderen Worten kann mittels der Steuerung eingestellt werden, an welchem Ort innerhalb des Werkstücks sich der Anregungslaserstrahl und der Bearbeitungslaserstrahl überlappen und dementsprechend eine Materialbearbeitung verursachen.

Die Steuerung kann gemäß einer Ausführungsvariante mechanisch ausgebildet sein. Dies kann beispielsweise dann sinnvoll sein, wenn ein Laserstrahl einem sich bewegenden Werkstück nachgeführt werden soll. In diesem Fall kann beispielsweise eine feste Verbindung zwischen dem Werkstück und der Positioniervorrichtung vorgesehen sein, welche eine Bewegung des Werkstücks zur Positioniervorrichtung überträgt. Die Positioniervorrichtung kann damit unmittelbar mechanisch geführt werden, beispielsweise über eine Führung in einer Schiene oder über einen Hebelmechanismus, welcher einen Winkel des darin befestigten Lasers ändert.

Die Steuerung kann jedoch auch elektronisch ausgeführt sein, beispielsweise derart, dass die jeweilige Positioniervorrichtung durch Elektromotoren betätigt wird, welche wiederum von der Steuerung gesteuert werden. Dies ermöglicht es, mit Hilfe der elektronischen Steuerung eine Strecke durch das Werkstück vorzugeben, entlang welcher der jeweilige Laserstrahl durch das Werkstück hindurchtreten soll. Somit kann auch der Überlapp der beiden Laserstrahlen und damit das Bearbeitungsvolumen eingestellt werden.

Gemäß einer bevorzugten Ausführungsvariante ist die Steuerung ferner derart ausgebildet, dass sie den Überlapp synchron mit dem Werkstück führen kann. Damit wird ermöglicht, dass der Überlapp sich auch bei einer Bewegung des Werkstücks an einer vorgegebenen Position innerhalb des Werkstücks befindet.

Des Weiteren ist die Steuerung bevorzugt derart ausgebildet, dass der Überlapp entlang eines vorgegebenen Pfads relativ zum Werkstück gesteuert werden kann. Dies bedeutet, dass ein Benutzer durch die Steuerung vorgeben kann, welche Bereiche innerhalb des Werkstücks durch einen Überlapp der beiden Laserstrahlen bearbeitet werden sollen. Im Fall einer Oberflächenbearbeitung kann sich ein solcher Pfad beispielsweise entlang einer Oberfläche des Werkstücks erstrecken, wobei entlang dieses Pfads Material abgetragen werden soll. Soll in dem Werkstück eine Dichteänderung, z.B. zu Markierungszwecken oder zur Einbringung von Spannungsfeldern zur Doppelbrechung, erfolgen, so kann ein solcher Pfad beispielsweise ein Pfad sein, entlang welchem das Werkstück eine Materialveränderung erfahren soll. Im Fall eines Verschweißens von zwei Werkstücken entlang einer Grenzfläche kann der vorgegebene Pfad sich entlang der Grenzfläche erstrecken, so dass eine Verschweißung der beiden Werkstücke entlang der Grenzfläche erfolgt. Wenn der Pfad beispielsweise mäanderförmig verläuft und Abstände zwischen benachbarten Strecken klein genug sind, kann eine flächige Verschweißung erreicht werden.

Gemäß dem zweiten Aspekt betrifft die Erfindung ein Verfahren zur Materialbearbeitung, insbesondere zum Materialabtrag, Verschweißen oder zum Ändern von Materialeigenschaften transparenter Werkstücke. Das Verfahren weist folgende Schritte auf:
- Richten eines Anregungslaserstrahls auf ein Werkstück, so dass eine Anregung des Werkstückmaterials in einem Anregungsvolumen ohne bleibende Materialveränderung erfolgt,
- Richten eines Bearbeitungslaserstrahls auf ein Werkstück, so dass er mit dem Anregungslaserstrahl in dem Bearbeitungsvolumen zum Überlapp gebracht wird und beim räumlichen und zeitlichen Zusammentreffen mit dem Licht des Anregungslaserstrahls eine bleibende Materialveränderung hervorruft
wobei sich der Bearbeitungslaserstrahl hinsichtlich wenigstens einer seiner Eigenschaften wie beispielsweise Impulsdauer und/oder Impulsspitzenleistung von dem Anregungsstrahl unterscheidet.

Bei dem Verfahren gemäß dem zweiten Aspekt der Erfindung wird zur Materialbearbeitung ein Anregungslaserstrahl verwendet, welcher beim Durchtritt durch das Werkstück alleine keine bleibende Materialveränderung hervorruft. Entsprechende Parameter dieses Anregungslaserstrahls sind vom zu bearbeitenden Werkstück abhängig, wie dies bereits mit Bezug auf die Vorrichtung gemäß dem ersten Aspekt der Erfindung beschrieben wurde. Erst wenn sich der Bearbeitungslaserstrahl und der Anregungslaserstrahl überlappen, erfolgt eine ausreichende Absorption von Strahlungsenergie, um eine Veränderung der Materialstruktur auf atomarer Ebene hervorzurufen. Die entsprechenden Mechanismen und Beispiele hierzu wurden bereits mit Bezug auf die Vorrichtung gemäß dem ersten Aspekt der Erfindung ausgiebig erläutert, weshalb hier auf eine Wiederholung verzichtet werden soll.

Bevorzugt weist der Bearbeitungslaserstrahl eine Wellenlänge zwischen 500 nm und 10 µm auf, besonders bevorzugt 1 µm. Für diesen Wellenlängenbereich stehen Lasersysteme, wie beispielsweise ein Festkörperlaser mit einer Wellenlänge von etwa 1 µm oder ein CO₂-Laser mit einer Wellenlänge von etwas 10 µm zur Verfügung.

Gemäß einer bevorzugten Ausführung ist der Anregungslaserstrahl gepulst und weist eine Pulsdauer von höchstens 10 ns auf, besonders bevorzugt deutliche kürzere Pulse im Bereich von Pico- und Femtosekunden. Mit derart kurzen Pulslängen können entsprechend hohe Feldstärken erreicht werden. Bevorzugt weist dabei der Anregungslaserstrahl eine Pulsenergie von höchstens 1 mJ auf, was sich in der Praxis als vorteilhaft erwiesen hat. Die Spitzenleistung des Anregungslaserstrahls beträgt dabei bevorzugt mindestens 10 MW, was sich ebenfalls in der Praxis als vorteilhaft erwiesen hat.

Gemäß einer bevorzugten Ausführungsform hat der Anregungslaserstrahl eine Repetitionsrate von mindestens 10 kHz, bevorzugt hat er eine Repetitionsrate zwischen 1 und 80 MHz. Diese Werte haben sich in der Praxis als vorteilhaft erwiesen.

Bevorzugt weist der Bearbeitungslaserstrahl eine Wellenlänge von 0,3 µm und 10 µm auf. Für diesen Wellenlängenbereich stehen Lasersysteme, wie beispielsweise ein Festkörperlaser mit einer Wellenlänge von etwa 1 µm oder ein CO₂-Laser mit einer Wellenlänge von etwas 10 µm, zur Verfügung.

Gemäß einer Ausführung ist der Bearbeitungslaserstrahl gepulst und weist eine Pulsdauer von vorzugsweise mindestens 10 ns, besonders bevorzugt zwischen 100 ns und 1 µs, auf. Auch längere Pulsdauern beim Bearbeitungslaserstrahl sind naheliegend, abhängig von der Anregungsdichte, die der Anregungslaserstrahl im Material liefert. Wie bereits mit Bezug auf die Vorrichtung gemäß dem ersten Aspekt der Erfindung beschrieben wurde, kann mittels einer geeigneten Pulsdauer auch die maximale Feldstärke des Bearbeitungslaserstrahls eingestellt werden. Gemäß einer alternativen Ausführung ist der Bearbeitungslaserstrahl nicht gepulst, mit anderen Worten handelt es sich in diesem Fall um einen Dauerstrichlaser.

Gemäß einer bevorzugten Ausführungsform hat der Bearbeitungslaserstrahl eine Repetitionsrate von mindestens 1 kHz bis 1 MHz Dieser Bereich hat sich in der Praxis als vorteilhaft erwiesen.

Gemäß einer bevorzugten Ausführung wird bei dem Verfahren gemäß dem zweiten Aspekt der Erfindung der Überlapp relativ zum Werkstück entlang eines vorgegebenen Pfads geführt. Damit kann eingestellt werden, an welchen Stellen es zu einer Materialbearbeitung im Werkstück kommen soll. Entsprechende Ausführungen und Vorteile wurden bereits mit Bezug auf eine mögliche Steuerung im Rahmen der Vorrichtung gemäß dem ersten Aspekt der Erfindung beschrieben.

Gemäß einer bevorzugten Ausführung wird während eines räumlichen und zeitlichen Zusammentreffens von Licht des Anregungslaserstrahls mit Licht des Bearbeitungslaserstrahls eine kritische Dichte von freien Elektronen im Material überschritten, ab welcher das Material eine bleibende Materialveränderung erfährt. Damit kann genau gesteuert werden, an welchen Stellen eine bleibende Materialveränderung, also eine Materialbearbeitung, erfolgen soll. Einzelheiten hierzu wurden bereits mit Bezug auf die Vorrichtung gemäß dem ersten Aspekt der Erfindung beschrieben.

Das Verfahren gemäß dem zweiten Aspekt der Erfindung kann besonders vorteilhaft mit einer Vorrichtung gemäß dem ersten Aspekt der Erfindung durchgeführt werden. Hierzu wird ein zu bearbeitendes Werkstück in geeigneter Weise in die Vorrichtung oder benachbart zu dieser gelegt oder eingespannt. Anschließend werden der Bearbeitungslaser und der Anregungslaser eingeschaltet und mittels der Positioniervorrichtungen entlang eines Pfads in oder auf dem Werkstück geführt, auf welchem eine Materialbearbeitung erfolgen soll.

Weitere Merkmale und Vorteile der Erfindung werden dem Fachmann bei Betrachtung der nachfolgenden, mit Bezug auf die beigefügten Figuren beschriebenen Ausführungsbeispiele offensichtlich werden.
- Fig. 1: zeigt das physikalische Grundprinzip der Erfindung: die Entwicklungsstufen bei der Konzentration N und mittleren Energie E des freien Elektronengases nach Einwirkung des Anregungslaserstrahlung und Bearbeitungslaserstrahlung in einen transparenten Werkstoff.
- Fig. 2A bis 2C: zeigen Ausführungsbeispiele einer Vorrichtung zur Materialbearbeitung gemäß dem ersten Aspekt der Erfindung.
- Fig. 3A bis 3C: zeigen mögliche Anordnungen von Anregungslaserstrahl und Bearbeitungslaserstrahl für den Materialabtrag von der Werkstoffoberfläche.
- Fig. 4A bis 4D: zeigen mögliche Anordnungen von Anregungslaserstrahl und Bearbeitungslaserstrahl für Dichteänderungen im Inneren des Werkstoffs.
- Fig. 5A bis 5C: zeigen mögliche Anordnungen von Anregungslaserstrahl und Bearbeitungslaserstrahl für Phasenänderungen an Grenzflächen.
- Fig. 6A bis 6D: zeigt den Verlauf eines Ausführungsbeispiels gemäß dem zweiten Aspekt der Erfindung: Ein Materialabtrag von einer Oberflächenseite bis zur Rückseite durch Relativbewegung des Werkstücks zum Bearbeitungslaser, z.B. zur Herstellung einer Durchgangsbohrung.
- Fig. 7: zeigt ein Ausführungsbeispiel eines Verfahrens zur Materialbearbeitung gemäß dem zweiten Aspekt der Erfindung.

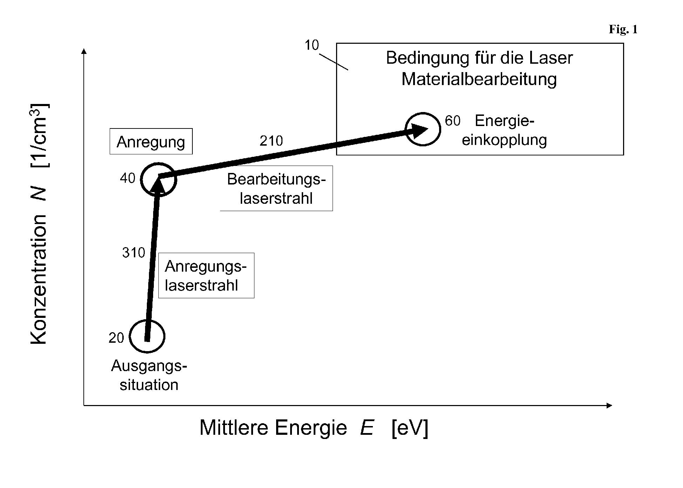

Fig. 1 illustriert schematisch das physikalische Wirkprinzip der aufgezeigten Erfindung. Dargestellt ist die qualitative Entwicklung der Konzentration und mittleren Energie des freien Elektronengases im Leistungsband eines transparenten Werkstoffes (Isolator). Prinzipiell wird davon ausgegangen, dass der Energietransfer vom Photonisch angeregten freien Elektronengas in das Material die gewünschte Reaktion, eine Veränderung typischerweise durch einen thermischen Reaktionskanal, verantwortlich ist. Voraussetzung für die Induzierung der gewünschten Laser-basierenden Materialreaktion auf der Oberfläche oder im Innern von transparenten Werkstoffen ist, dass genügend freie Elektronen mit ausreichender Energie im Leistungsband vorliegen. Diese Voraussetzung hinsichtlich Konzentration (symbolisch mit N charakterisiert und üblicherweise in Einheiten von 1/cm³ beschrieben) und mittlerer Energie (symbolisch mit E charakterisiert und üblicherweise in Einheiten von eV beschrieben) der freien Elektronen als Bedingung für die Laser Materialbearbeitung wird in Fig. 1 als schraffiertes Feld 10 gekennzeichnet. Die Ausgangssituation, in Fig. 1 als 20 gekennzeichnet, liegt für transparente Werkstoffe in einem anderen Gebiet. Die Erfindung beschreibt einen gänzlich neuen Weg, um von der Ausgangsituation 20 in den Bereich der Laser Materialbearbeitung 10 zu gelangen. Der Anregungslaserstahl 30 mit der vergleichsweise hohen Spitzenleistung und moderaten Pulsenergie liefert beste Voraussetzungen für eine effiziente Erhöhung der Konzentration N von freien Elektronen, ohne die mittlere Energie des Elektronengases signifikant zu beeinflussen bzw. zu erhöhen. Es wird im Anregungsvolumen eine Anregungsstufe 40 erzielt, die nun ein höheres Konzentrationsniveau für das Erreichen von 10 darstellt. Bei geeigneter zeitlichen und räumlichen Überlappung des Bearbeitungslaserstrahls 50 mit dem Anregungsvolumen, charakterisiert durch die Anregungsstufe 40, kann nun effizient Energie in das dichtere Elektronengas gepumpt werden. Die mittlere Energie im freien Elektronengas kann nun deutlich gesteigert werden, ohne gleichzeitig die Konzentration erhöhen zu müssen, da von der Anregungsstufe 40 aus genügend freie Elektronen zur Energieaufnahme vorliegen. Es wird in Fig. 1 schematisch die Energieeinkopplungsstufe 60 erreicht, bei der eine Materialbearbeitung erzielt wird.

Fig. 1 skizziert modellhaft das Grundprinzip des Verfahrens, die dieser Erfindung zugrunde liegt und besitzt einen rein illustrativen Charakter. Andere, leicht abweichende Darstellungen bei der Ausgangssituation 20, der Anregungsstufe 40 und der Energieeinkopplungsstufe 60 sind denkbar und verletzen nicht die Grundidee der vorgestellten Erfindung. Entscheidend ist, das nur durch das Zusammenwirken beider Laserstrahlung, dem Anregungslaserstrahl 30 und dem Bearbeitungslaserstrahl 50 die in Fig. 1 skizzierte N und E Bedingung für die Laser Materialbearbeitung 10 erreicht wird. Die relativen Positionen der Ausgangssituation 20 und Anregungsstufe 40 können und dürfen abweichen, da hier für bestimmte transparente Werkstoffe und Laserparameter bei dem Anregungslaser auch andere Darstellungen, z.B. eine Verschiebung der Anregungsstufe 40 zu höheren mittleren Energien, durchaus denkbar ist.

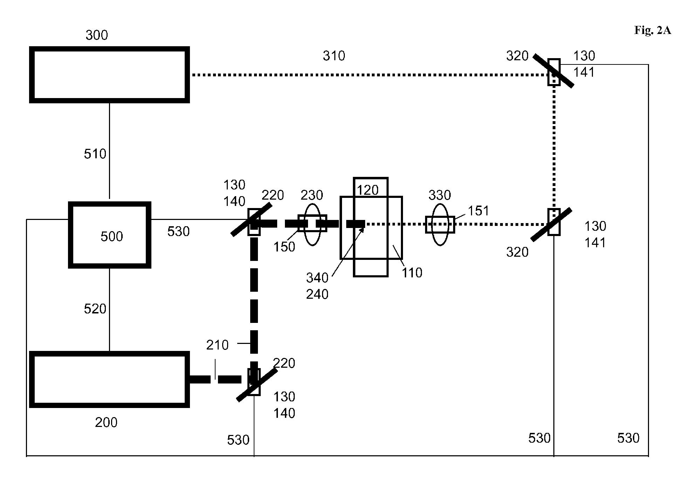

Fig. 2A bis 2C zeigt jeweils schematisch eine Vorrichtung zur Materialbearbeitung gemäß dem ersten Aspekt der Erfindung. Die Vorrichtung 100 weist eine Werkstückauflage mit einer bevorzugt motorisierten 3D-Achsenverstellung 110 auf, auf welcher vorliegend ein Werkstück 120 aufliegt. Dieses Werkstück 120 soll mit Hilfe eines Bearbeitungslasers 200 und eines Anregungslasers 300 bearbeitet werden.

Der Anregungslaserstrahl 310 des Anregungslasers 300 wird mittels üblicher optischer Komponenten, bestehend aus für die Wellenlänge des Anregungslaserstrahls 310 abgestimmten Spiegel 320 geführt. Die Spiegel 320 sind in einer Halterung 130 mit Positioniervorrichtung 140 befestigt, welche wiederum an der Vorrichtung 100 angebracht sind. Auch der Bearbeitungslaserstrahl 210 des Bearbeitungslasers 200 wird mittels üblicher optischer Komponenten, bestehend aus für die Wellenlänge des Bearbeitungslaserstrahls 210 abgestimmten Spiegel 220 geführt. Auch diese Spiegel 220 sind jeweils in einer Halterung 130 mit Positioniervorrichtung 140 befestigt, welche wiederum an der Vorrichtung 100 angebracht sind. Die Laserstrahlen des Anregungs- und Bearbeitungslasers (210, 310) werden mittels üblicher optischer Komponenten in das Werkstück gebündelt. Hierzu eignen sich beispielsweise eine Sammellinse 230,330, die hinsichtlich der Brennweite jeweils für den Bearbeitungslaserstrahl 210,230 und den Anregungslaserstrahl 310,330 in Abhängigkeit von den Laserparametern und der Anwendung individuell angepasst werden können.

Der durch die Optik 330 in das Werkstück 120 gebündelte Anregungslaserstrahl 310 definiert innerhalb des Werkstücks 120 ein Anregungsvolumen 340. Dieses Anregungsvolumen 310 ist genau derjenige Bereich innerhalb des Werkstücks 120, durch welchen der Anregungslaserstrahl 310 hindurchtritt. Innerhalb dieses Anregungsvolumen 340 induziert der Anregungslaserstrahl 310 zwar ein freies Elektronengas, bewirkt jedoch noch keine bleibende Materialveränderung. Das Anregungsvolumen 340 ist vielmehr dasjenige Volumen, in welchem dann eine Materialbearbeitung erfolgen kann, wenn der Bearbeitungslaserstrahl 210 durch dieses hindurchtritt. Bei geeigneter Strahlführung 220 und Fokussierung 230 entsteht ein Überlapp 240 der beiden Laserstrahlen 210, 310, im Werkstück 120. In diesem Überlapp ist dann die durch den Bearbeitungslaserstrahl 210 absorbierte Energie im Werkstück 120 groß genug, um eine bleibende Materialveränderung zu induzieren. In einer bevorzugten Anordnung ist der Strahldurchmesser des Bearbeitungslaserstrahls 210 im Werkstück 120 größer, als der Strahldruckmesser des Anregungslaserstrahls 310, um die Absicherung einer räumlichen Überlappung 240 zu erleichtern.

Die Vorrichtung 100 zur Materialbearbeitung weist ferner eine Steuerung 500 auf, welche mittels einer ersten Leitung 510 mit dem Bearbeitungslaser 200 verbunden ist und welche ferner mit einer zweiten Leitung 520 mit dem Anregungslaser 300 verbunden ist.

Durch zusätzliche Verbindung mit den Positioniervorrichtungen 140, 150 mittels der Leitungen 530 kann die Steuerung 500 die jeweiligen elektrischen Servomotoren der Positioniervorrichtungen 140,150 betätigen. Damit kann sie die Ausbreitungsrichtungen des Bearbeitungslaserstrahls 230 und des Anregungslaserstrahls 330 steuern.

Über die Verbindungen der Steuerung 500 zu dem Bearbeitungslaser 200 und dem Anregungslaser 300 kann die Steuerung 500 diese nicht nur ein- und ausschalten, sondern auch eine zeitliche Korrelation der Pulse sicherstellen. Die meisten kommerziell verfügbaren, industrietauglichen Lasersysteme lassen sich extern triggern, d.h. der Startpunkt und Taktfrequenz der Laserpulse können in einem jeweils vom Laserhersteller definierten Prozessfenster angesteuert werden. Beispielsweise könnte die Taktrate des Anregungslasers 300 zur Ansteuerung des Bearbeitungslasers 200 verwendet werden, wobei die Steuerungseinheit 500 die geeigneten Anpassungen zur verbesserten zeitlichen Korrelation der Laserpulse im Bereich der räumlichen Überlappung 240 vornimmt. Die Korrelation der Laserpulse vom Bearbeitungslaserstrahl 210 und vom Anregungslaserstrahl 310 können beispielsweise am Ort der räumlichen Überlappung 240 von schnellen Photodioden gemessen und die Synchronisation mittels Steuerungseinheit 500 optimiert werden. Damit kann eine besonders effiziente und präzise Materialbearbeitung erreicht werden.

Der Bearbeitungslaser 200 ist vorliegend ein dioden-gepumpter Festkörperlaser, der lang-gepulste Laserstrahlung mit einer bevorzugten Pulsdauer von 100 ns bis 1 µs bei einer bevorzugten Wellenlänge von ca. 1 µm generiert. Der Anregungslaser 300 ist vorliegend ein dioden-gepumpter Festkörperlaser, der kurz-gepulste Laserstrahlung mit einer bevorzugten Pulsdauer von 0,1 bis 100 ps bei einer bevorzugten Wellenlänge von ca. 0,5 µm generiert. Die Pulsenergie liegt typischerweise bei 1 bis 100 µJ, um Spitzenleistungen zwischen 0,1 bis 10 MW aufzuweisen. Eine andere denkbare Variante ist, dass der Bearbeitungslaserstrahl 210 eine (sichtbar grüne) Wellenlänge von ca. 0,5 µm besitzt, und somit die Positionierung in der Vorrichtung 100 vereinfacht wird. Allerdings wird in dieser Variante eine geringere Effizienz bei der Energieeinkopplung und somit Erhöhung der mittleren Energie des Elektronengases im Anregungsvolumen erwartet. Eine andere denkbare Variante ist, dass der Anregungslaserstrahl 310 eine Wellenlänge von ca. 1,0 µm besitzt und somit die Kontrolle der räumlichen Überlappung vom Anregungslaserstrahl im Fokus (240) relativ zum Fokus des Bearbeitungslaserstrahls (340) bei fokussierender Strahlführung in das Werkstück 120 in der Vorrichtung 100 vereinfacht wird. Allerdings wird in dieser Variante eine geringere Effizienz bei der Entwicklung der Konzentration freier Elektronen im Anregungsvolumen erwartet.

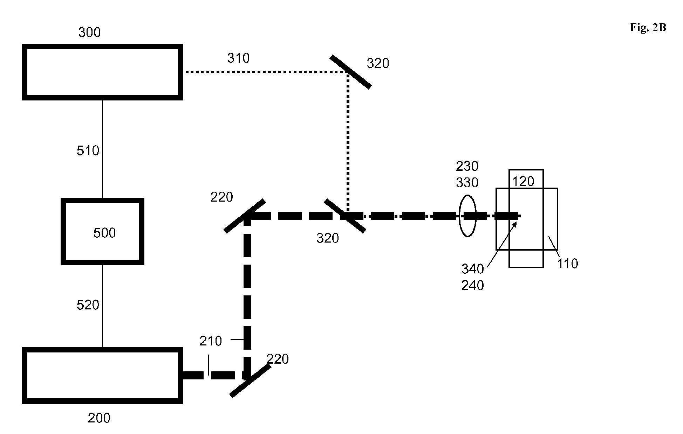

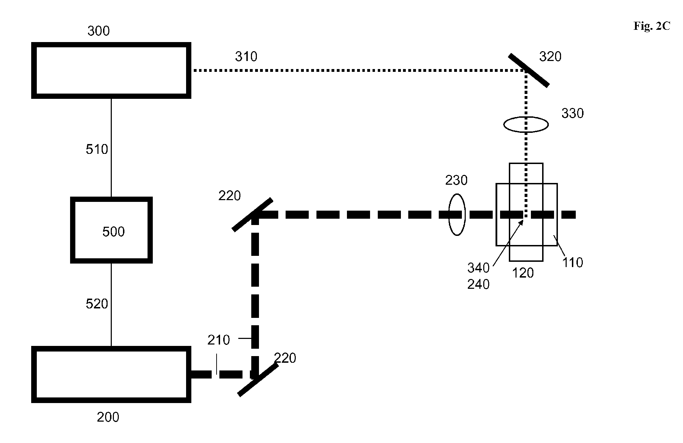

Fig. 2A, 2B und 2C unterscheiden sich durch die Ausbreitungsrichtung des durch die optischen Komponenten 130, 210, 220 geführten Anregungslaserstrahls 310 für die Anwendung Laser Oberflächenbearbeitung und Innenbearbeitung, abhängig von den Fokuslagen (240 und 340) des Anregungs- und Bearbeitungslasers. Die Strahlführung des Bearbeitungslaserstrahls 210 ist in den Fig. 2A, 2B und 2C identisch.

In Fig. 2A wird eine Anordnung gezeigt, bei der Anregungslaserstrahl 310 und Bearbeitungslaserstrahl 210 im Werkstück 120 gegenläufig sind.

In Fig. 2B wird eine andere mögliche Anordnung gezeigt, bei der Anregungslaserstrahl 310 in den Strahlengang vom Bearbeitungslaserstrahl 210 eingeführt wird, so dass beide fokussierten Laserstrahlen aus der selben Richtung in der Werkstück 120 zur Überlagerung (240 und 340) gebracht werden.

In Fig. 2C wird eine andere mögliche Anordnung gezeigt, bei der Anregungslaserstrahl 310 senkrecht zum Bearbeitungslaserstrahl 210 in das Werkstück 120 zur Überlagerung (240 und 340) gebracht werden. Im Gegensatz zu den Anordnungen in Fig. 2A und 2B definiert der Kreuzungspunkt zwischen Anregungslaserstrahl 310 und Bearbeitungslaserstrahl 210 die räumliche Überlappung der beiden Laserstrahlen (240 und 340) für die innenliegende Bearbeitung. Diese Anordnung wird für die Innenbearbeitung bevorzugt, liefert aber auch eine größere experimentelle Herausforderung bei der Sicherstellung der räumlichen und zeitlichen Überlappung der beiden Laserstrahlen.

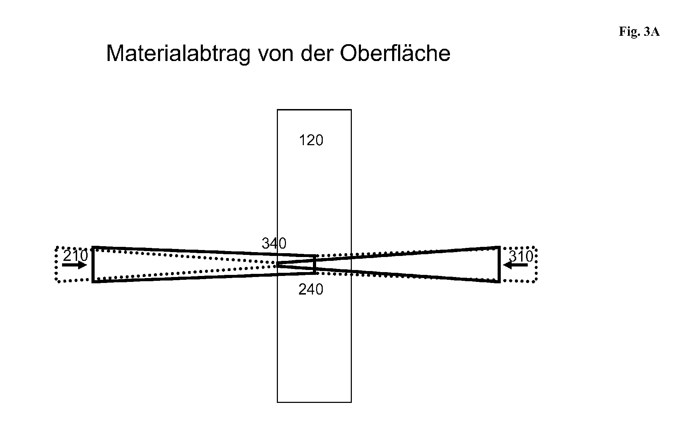

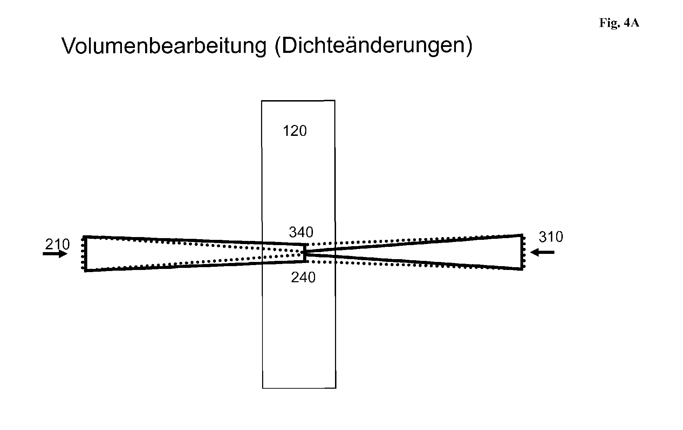

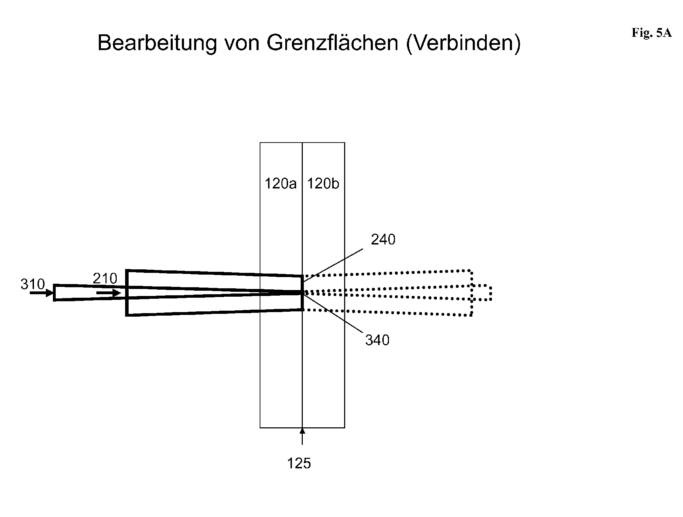

Fig. 3A bis 3C zeigt beispielhaft mögliche Anordnungen von Anregungslaserstrahl und Bearbeitungslaserstrahl von der Werkstoffoberfläche. Es handelt sich hierbei, genauso wie bei den nachfolgend beschriebenen Figuren 4A bis 4D und 5A bis 5C, lediglich um schematische Darstellungen, welche das Zusammenwirken der beiden Laserstrahlen zeigen. Es sind jedoch auch zahlreiche andere Konstellationen der Relation der beiden Laserstrahlen zueinander denkbar.

In den Figuren 3A bis C ist jeweils dargestellt, wie ein Werkstück 120 für den Materialabtrag bearbeitet werden kann. Das Werkstück 120 ist nicht zwangsläufig identisch mit dem Werkstück 120, welches in Fig. 2 dargestellt wurde. Das Werkstück 120 ist hier lediglich schematisch zu verstehen.

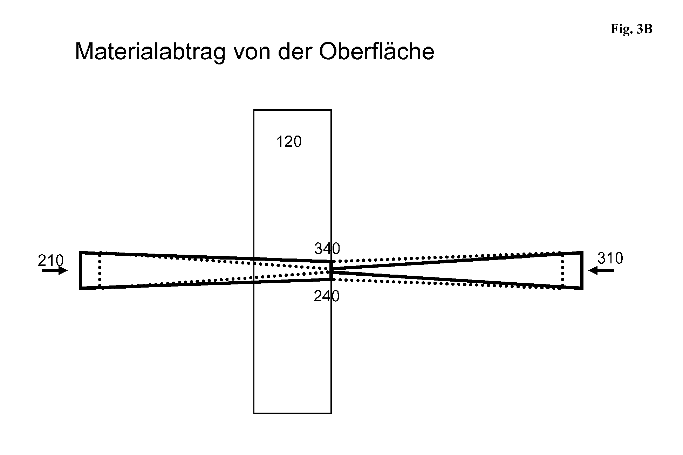

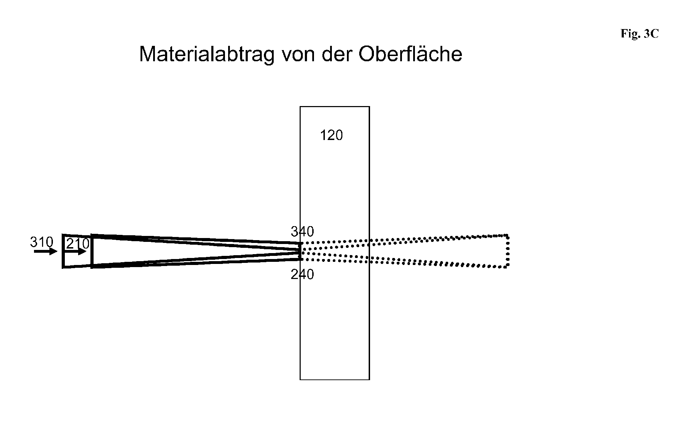

Fig. 3 zeigt mögliche Anordnungen von Anregungslaserstrahl und Bearbeitungslaserstrahl für den Materialabtrag von der Werkstoffoberfläche. In Fig. 3A wird gezeigt, wie zur Bearbeitung des Werkstücks wird ein gepulster Anregungslaserstrahl 210 auf oder in das Werkstück 120 fokussiert wird. Dabei wird im Fokus 340 ein freies Elektronengas in dem Werkstück 120 erzeugt. Ohne einen weiteren Laserpuls verbleibt das freie Elektronengas jedoch unter einer kritischen Dichte, ab welcher eine Materialbearbeitung erfolgen würde. Dies liegt daran, dass zu wenig Lichtenergie des Anregungslaserpulses 210 absorbiert wird, um die gewünschte Materialreaktion zu bewirken.

Ein Bearbeitungslaserstrahl 210 wird zur Materialbearbeitung in räumliche und zeitliche Überlagerung mit dem gepulsten Anregungslaserstrahl 310 gebracht. Die zeitliche Überlappung bedeutet, dass ein Laserpuls des gepulsten Anregungslaserstrahls 310 gleichzeitig im Bearbeitungsvolumen wirksam ist, wie der Bearbeitungslaserstrahl 210. Die absorbierte Energie des Bearbeitungslaserstrahls 210 wird genutzt, um die Dichte des freien Elektronengases im Bereich von 340 zu erhöhen. Mit dem Bearbeitungslaserstrahl 210 wird das freie Elektronengas mit einer steuerbaren Dynamik auf eine ausreichende Dichte gebracht, um für eine bleibende Veränderung im Werkstück 120 zu sorgen. Dabei wird weitere Energie von dem Bearbeitungslaserstrahl absorbiert, um die gewünschte Materialreaktion zu induzieren. Hier muss der Fokus 240 des Bearbeitungslaserstrahls 210 nicht zwangsläufig mit dem Fokus 340 des Anregungslasers 310 präzise in Überdeckung gebracht werden. Häufig genügt eine ausreichende Energieflussdichte des gebündelten Bearbeitungslaserstrahls 210, um im Bereich der hohen Anregungsdichte 340 die gewünschte Materialreaktion zu induzieren.

Fig. 3a zeigt den Fall, in welchem der Anregungslaserstrahl 310 und der Bearbeitungslaserstrahl 210 sich in der entgegengesetzter Richtung ausbreiten und sich an (340) oder nahe einer Oberseite des Werkstücks 120 überlappen. Dementsprechend wird an dieser Oberseite Material abgetragen. Fig. 3B zeigt den Fall, in welchem sich der Anregungslaserstrahl 310 und der Bearbeitungslaserstrahl 210 ebenfalls in der der entgegengesetzter Richtung ausbreiten, jedoch diesmal der Bearbeitungslaserstrahl 210 das Werkstück durchquert, um diesmal an einer Unterseite des Werkstücks 120 mit dem Anregungslaserstrahl zu überlappen (340 und 240). Dementsprechend wird an der Unterseite Material abgetragen.

Fig. 3C zeigt den Fall, in welchem sich der Anregungslaserstrahl 310 und der Bearbeitungslaserstrahl 210 in gleichen Richtungen ausbreiten und sich an der Oberseite des Werkstücks 120 überlappen. Auch in diesem Fall wird, wie bei Fig. 3A, Material von der Oberseite des Werkstücks 120 abgetragen. Beide Laserstrahlen (210 und 310) können jedoch auch zunächst das Werkstück durchqueren, um auf gegenüber liegenden Oberfläche (Unterseite) die Überlappung (240 und 340) für einen Materialabtrag nach dem hier angezeigten und in Fig. 1 skizzierten Verfahren zu induzieren.

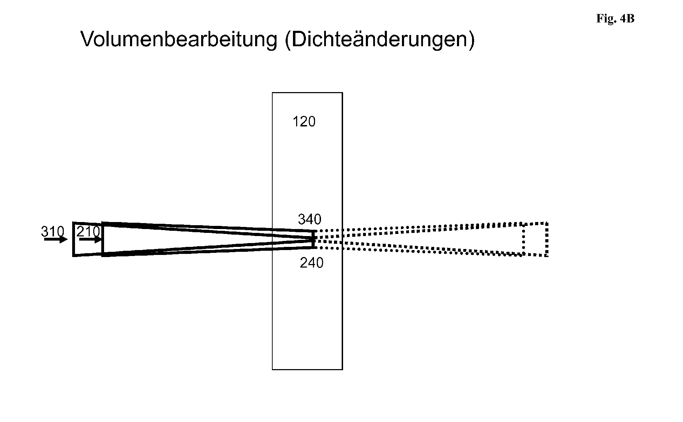

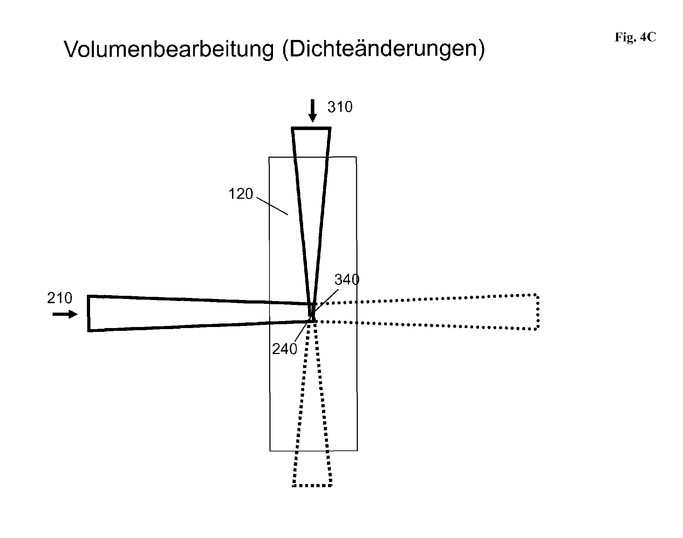

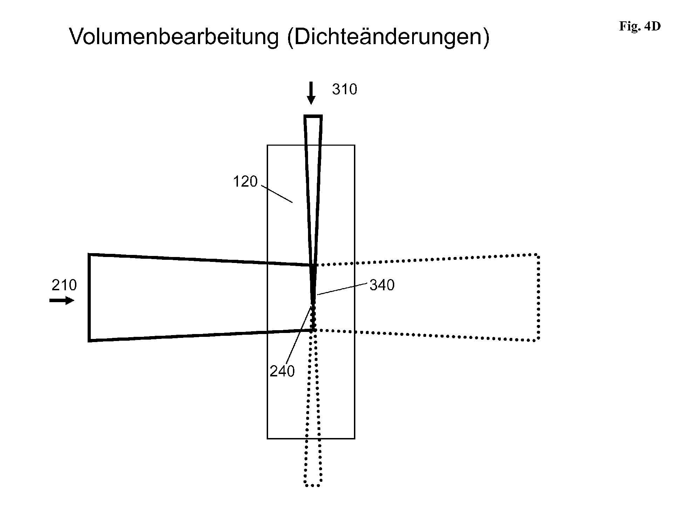

Fig. 4 zeigt beispielhaft mögliche Anordnungen von Anregungslaserstrahl und Bearbeitungslaserstrahl für Dichteänderungen im Inneren des Werkstoffs. Auch hier sei verstanden, dass die gezeigten Anordnungen lediglich beispielhaft zu verstehen sind und eine Vielzahl von weiteren möglichen Anordnungen zur Erreichung des gewünschten Effekts führen können.

Fig. 4A zeigt einen Fall, in welchem sich der Anregungslaserstrahl 310 entgegengesetzt zum Bearbeitungslaserstrahl 210 ausbreitet und sich mit diesem ebenfalls im Inneren des Werkstücks 120 an einem Volumenelement (240 / 340) im Innern des Werkstücks überlappt. Fig. 4B zeigt demgegenüber einen Fall, in welchem der Anregungslaserstrahl 310 und der Bearbeitungslaserstrahl 210 die gleiche Ausbreitungsrichtung haben und sich im Inneren des Werkstücks 120 an einem Volumenelement (240 / 340) im Innern des Werkstücks überlappen. Fig. 4C zeigt einen Fall, in welchem der Anregungslaserstrahl 310 quer zum Bearbeitungslaserstrahl 210 auf den Bereich 340, in welchem eine Materialbearbeitung erfolgen soll, trifft. Fig. 4D zeigt einen zu Fig. 4C vergleichbaren Fall, in welchem der Anregungslaserstrahl 310 quer zum Bearbeitungslaserstrahl 210 auf den Bereich 340 trifft. Um Unterschied zum skizzierten Fall in Fig. 4C ist der Durchmesser des Bearbeitungslaserstrahls 210 im Werkstück 120 deutlich größer, um ein größeres Bearbeitungsvolumen (240 und 340) abdecken zu können. Dieses Vorgehen ermöglicht komplexe Modulationen in Richtung des Anregungslaserstrahls, indem der Bearbeitungslaserstrahl 210 im Anregungsvolumen 340 eine Intensitätsmodulation besitzt, beispielsweise durch Maskenabbildung oder andere optische Verfahren, die eine steuerbare Intensitätsverteilung senkrecht zur Ausstrahlungsrichtung des Bearbeitungslasers (210) ermöglichen.

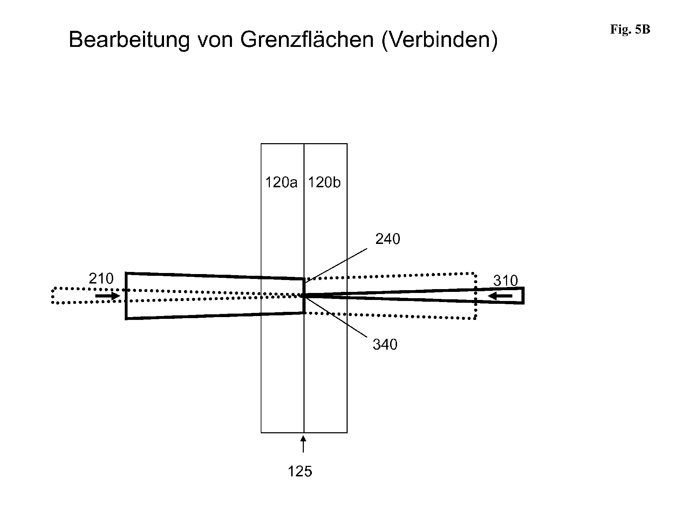

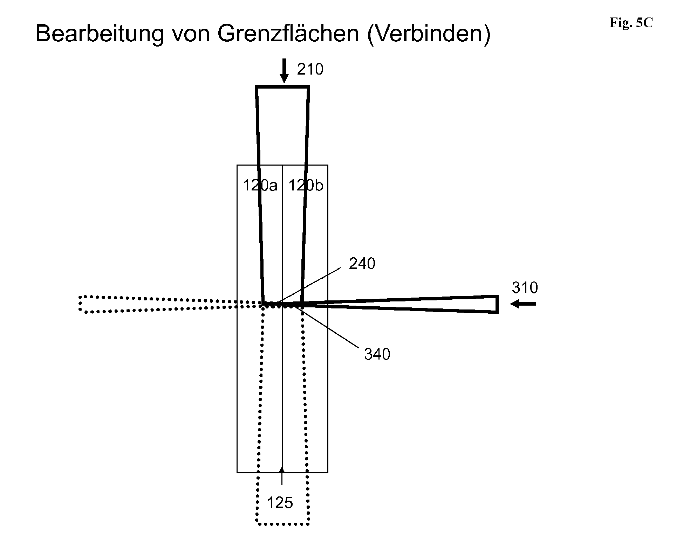

Fig. 5 zeigt mögliche Anordnungen von Anregungslaserstrahl und Bearbeitungslaserstrahl für Phasenänderungen an Grenzflächen 125. Hier sei ebenfalls verstanden, dass es sich lediglich um beispielhafte Fälle handelt und dass es eine Vielzahl von weiteren möglichen solcher Anordnungen gibt. Die Grenzfläche 125 verläuft hier in einem ersten Werkstück 120a und einem zweiten Werkstück 120b, welche mit Hilfe der laserinduzierten Materialbearbeitung entlang der Grenzfläche verbunden werden soll.

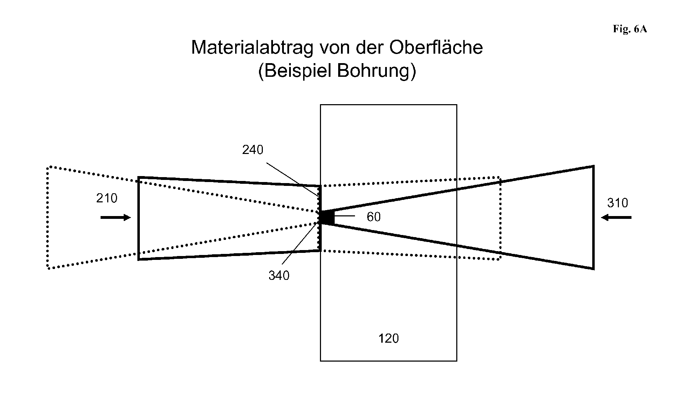

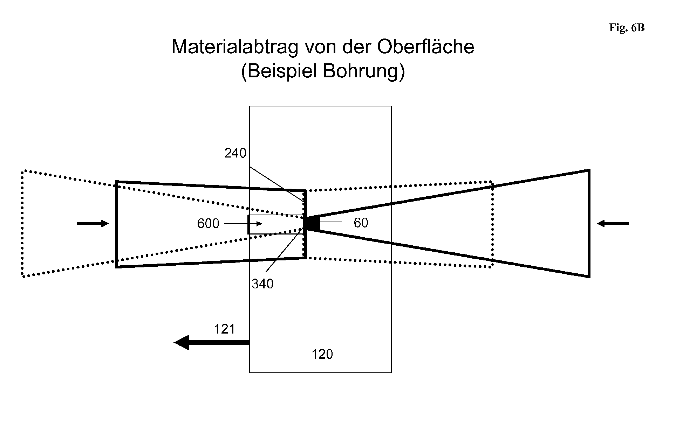

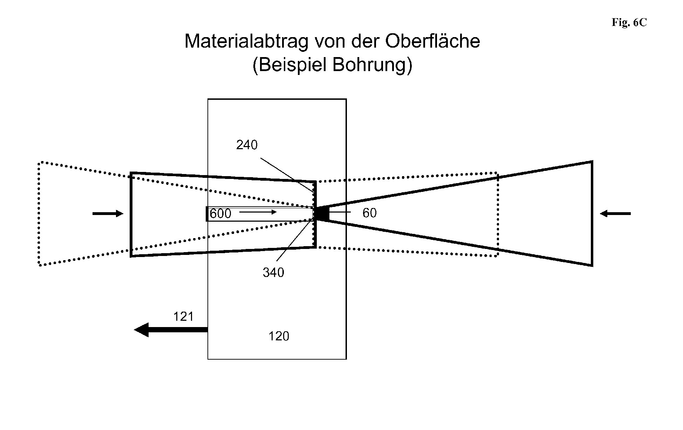

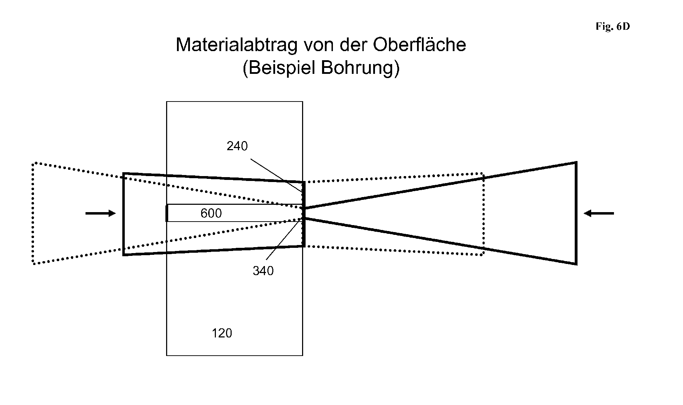

Fig. 5A zeigt einen Fall, in welchem sich der Anregungslaserstrahl 310 und der Bearbeitungslaserstrahl 210 in der gleichen Richtung ausbreiten und sich in einem Gebiet 340 (240), welches die Grenzfläche 125 schneidet, überlappen. Damit kann in dem Gebiet 340 an der Grenzfläche eine Materialbearbeitung stattfinden, um das erste Werkstück 120a und das zweite Werkstück 120b entlang der Grenzfläche 125 miteinander zu verschweißen. Fig. 5B zeigt in Abwandlung dazu einen Fall, in welchem sich der Anregungslaserstrahl 310 und der Bearbeitungslaserstrahl 210 in entgegengesetzte Richtungen ausbreiten, sich jedoch ebenfalls auf der Grenzfläche 125 an Position 340 (240) überlappen. Fig. 5C zeigt einen Fall, in welchem der Anregungslaserstrahl 310 quer zu einer Ausbreitungsrichtung des Bearbeitungslaserstrahls 210 auf den Bereich 340 (240) trifft, in welchem eine Materialverarbeitung stattfinden soll. Der Bearbeitungslaserstrahl 210 breitet sich dabei in einer Ebene der Grenzfläche 125 aus, verläuft also mit anderen Worten zwischen dem ersten Werkstück 120a und dem zweiten Werkstück 120b. Fig. 6A bis 6D zeigt ein Ausführungsbeispiel eines Verfahrens zur Materialbearbeitung von der Oberfläche aus, gemäß dem zweiten Aspekt der Erfindung. Der Verlauf des Bearbeitungslaserstrahls 210 und des Anregungslaserstrahls 310 am Werkstück 120 entspricht der in Fig. 2A und 3A skizzierten Anordnung. In Fig. 6A liegt der Überlapp 340 (240) der beiden Laserstrahlen an der vom Bearbeitungslaserstrahl 210 aus gesehen vorderen Oberfläche. Die gewünschte Materialreaktion in Form eines Materialabtrags erfolgt in der Region 600. Das Werkstück 120 wird nun parallel und in Richtung zum Bearbeitungslaserstrahl 210 bewegt. Bei geeigneter Bewegungsgeschwindigkeit, wie in Fig. 6B als Zwischenergebnis skizziert, wird in zunehmender Tiefe des Werkstücks 120 ein Materialabtrag in der Region 600 am Überlapp 340 (240) induziert, so dass eine Sackbohrung 610 entsteht. Wird das Werkstück 120 weiter in Richtung 125 bewegt, so wie in Fig. 6C skizziert, so kann das Sackloch eine größere Tiefe erreichen. Diese bevorzugt gleichmäßige Bewegung des Werkstücks in Richtung des Bearbeitungslasers 210 kann weiter fortgesetzt werden, um letztendlich eine Durchgangsbohrung zu erhalten, wie in Fig. 6D gezeigt.

Das in Fig. 6A bis 6D skizzierte Ausführungsbeispiel dient zur Illustration einer wichtigen Anwendung des neuen Verfahrens, die Realisierung von Durchgangsbohrungen. Weitere Ausführungsbeispiele auf der Grundlage dieser Erfindung können aus der Beschreibung zu den Figuren 2A bis 2C, 3A bis 3C, 4A bis 4D und 5A bis 5C entnommen werden.

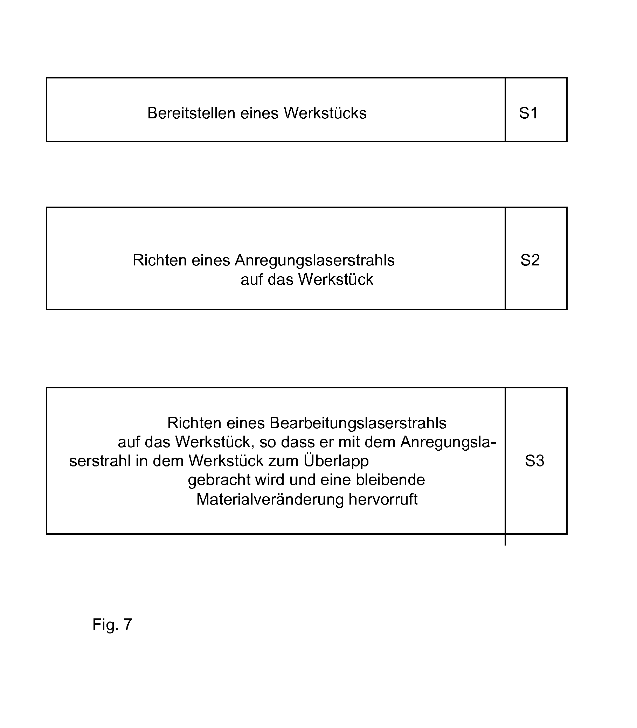

In Fig. 7 ist in Form eines Flussdiagramms ein Ausführungsbeispiel eines Verfahrens zur Materialbearbeitung gemäß dem zweiten Aspekt der Erfindung dargestellt.

In Schritt S1 des dargestellten Verfahrens wird ein Werkstück bereitgestellt, welches bearbeitet werden soll. Das Werkstück besteht dabei aus einem transparenten Material.

In Schritt S2 wird ein Anregungslaserstrahl auf das Werkstück gerichtet. Der Anregungslaserstrahl wird durch das Werkstück hindurchtreten und damit ein Anregungsvolumen definieren, in welchem aufgrund einer erhöhten Dichte freier Elektronen bei Hinzutreten eines Bearbeitungslaserstrahls eine Materialbearbeitung stattfinden kann.

In Schritt S3 wird ein Bearbeitungslaserstrahl auf das Werkstück gerichtet, so dass er mit dem Anregungslaserstrahl in dem Werkstück zum Überlapp gebracht wird und eine bleibende Materialveränderung hervorruft. Die Materialveränderung erfolgt dabei durch eine Energieabsorption aus den beiden Laserstrahlen, welche zu einer lokalen Erwärmung und damit einer Änderung der atomaren Struktur des Materials führt.

### Bezugszeichenliste

- 10: Bedingungsfeld für die Laser Materialbearbeitung
- 20: Ausgangssituation
- 40: Anregung
- 60: Energieeinkopplung
- 100: Vorrichtung
- 110: 3D-Achsenverstellung
- 120, 120a, 120b: Werkstück
- 121: Werkstückbewegung (mittels 110)
- 125: Grenzfläche (zwischen 120a und 120b)
- 130: Halterung
- 140: Positioniervorrichtung (für 210 mittels 220)
- 150: Positioniervorrichtung (für 210 mittels 230)
- 141: Positioniervorrichtung (für 310 mittels 320)
- 151: Positioniervorrichtung (für 310 mittels 330)
- 200: Bearbeitungslaser
- 210: Bearbeitungslaserstrahl
- 220: Spiegel (für 210)
- 230: Sammellinse (für 210)
- 240: Überlappbereich
- 300: Anregungslaser
- 310: Anregungslaserstrahl
- 320: Spiegel (für 310)
- 330: Sammellinse (für 310)
- 340: Anregungsvolumen
- 500: Steuerung
- 510: erste Leitung (zu 300)
- 520: zweite Leitung (zu 200)
- 530: Verbindungsleitungen (zu 140, 150, 141, 151)
- 600: Bereich nach dem Laser Materialabtrag (z.B. Bohrung oder Graben)

## Patentansprüche

1. Vorrichtung (100) zur Materialbearbeitung, insbesondere zum Materialabtrag, Verschweißen oder zum Ändern von Materialeigenschaften transparenter Werkstücke,
mit einem Bearbeitungslaser (200), welcher im Betrieb einen Bearbeitungslaserstrahl (210) emittiert,
wobei der Bearbeitungslaser mit einer ersten Positioniervorrichtung (140 150) verbunden ist, welche den Bearbeitungslaserstrahl im Betrieb mittels geeigneter Optiken (220, 230) relativ zu einem Werkstück (120) positioniert, **dadurch gekennzeichnet, dass**
die Vorrichtung (100) zur Materialbearbeitung ferner einen Anregungslaser (300) aufweist, welcher im Betrieb einen Anregungslaserstrahl (310) emittiert, der alleine keine bleibende Materialveränderung bewirkt,
wobei der Anregungslaser (300) mit einer zweiten Positioniervorrichtung (141, 151) verbunden ist, welche den Anregungslaserstrahl im Betrieb mittels geeigneter Optiken (320, 330) relativ zu einem Werkstück und dem Bearbeitungslaserstrahl in diesem Werkstück positioniert,
wobei die erste Positioniervorrichtung (140, 150) und die zweite Positioniervorrichtung (141, 151) so ausgebildet sind, dass der Anregungslaserstrahl (310) im Betrieb ein definiertes Anregungsvolumen (340) induziert, in dem eine Materialbearbeitung des Werkstücks (120) mit dem Bearbeitungslaserstrahl (210) erfolgt.

2. Vorrichtung nach Anspruch 1,
bei welcher der Bearbeitungslaser (200) eine Wellenlänge zwischen 300 nm und 10 µm aufweist.

3. Vorrichtung nach einem der Ansprüche 1 oder 2,
bei welcher der Bearbeitungslaser (200) gepulst ist und eine Pulsdauer von mindestens 10 ns, bevorzugt mindestens 100 ns bis 1 µs aufweist oder bei welcher der Bearbeitungslaser (200) nicht gepulst ist.

4. Vorrichtung nach einem der Ansprüche 1 bis 3,
bei welcher der Anregungslaser (300) gepulst ist und eine Pulsdauer von höchstens 1 ns aufweist, bevorzugt 0,1 bis 10 ps.

5. Vorrichtung nach einem der Ansprüche 1 bis 4,
bei welcher der Anregungslaser (300) gepulst ist und eine Pulsenergie von höchstens 1 mJ aufweist.

6. Vorrichtung nach einem der Ansprüche 1 bis 5,
bei welcher der Anregungslaser (300) gepulst ist und eine Spitzenleistung von mindestens 100 kW aufweist.

7. Vorrichtung nach einem der Ansprüche 1 bis 6,
bei welcher der Anregungslaser (300) gepulst ist und eine Repetitionsrate von mehr als 10 kHz, bevorzugt zwischen 0,1 und 1 MHz aufweist.

8. Vorrichtung nach einem der Ansprüche 1 bis 7,
welche ferner eine Steuerung (500) aufweist, die Positioniervorrichtungen (140, 150, 141, 151) derart steuern kann, dass ein Überlapp (340) der Laserstrahlen (210, 310) relativ zu dem Anregungsvolumen (240) auf oder in dem Werkstück (120) festgelegt werden kann.

9. Vorrichtung nach Anspruch 8,
wobei die Steuerung (500) ferner ausgebildet ist, den Überlapp (340) und das Anregungsvolumen (240) synchron mit dem Werkstück (120) zu führen.

10. Vorrichtung nach einem der Ansprüche 8 oder 9,
wobei die Steuerung (500) ferner ausgebildet ist, den Überlapp (340) und das Anregungsvolumen (240) entlang eines vorgegebenen Pfads relativ zum Werkstück (120) zu steuern.

11. Verfahren zur Materialbearbeitung, insbesondere zum Materialabtrag, Verschweißen oder zum Ändern von Materialeigenschaften transparenter Werkstücke,
welches folgende Schritte aufweist:
- Richten eines Anregungslaserstrahls auf ein Werkstück, so dass eine Anregung des Werkstückmaterials in einem Bearbeitungsvolumen ohne bleibende Materialveränderung erfolgt,
- Richten eines Bearbeitungslaserstrahls auf das Werkstück, so dass er mit dem Anregungslaserstrahl in dem Bearbeitungsvolumen zum Überlapp gebracht wird und beim räumlichen und zeitlichen Zusammentreffen mit Licht des Anregungslaserstrahls eine bleibende Materialveränderung hervorruft, wobei sich der Bearbeitungslaserstrahl hinsichtlich wenigstens einer seiner Eigenschaften wie beispielsweise Impulsdauer und/oder Impulsspitzenleistung von dem Anregungsstrahl unterscheidet.

12. Verfahren nach Anspruch 11,
bei welchem der Bearbeitungslaserstrahl eine Wellenlänge zwischen 300 nm und 10 µm aufweist
oder bei welchem der Bearbeitungslaserstrahl gepulst ist und eine Pulsdauer von mindestens 10 ns, bevorzugt 100 ns bis 1 µs aufweist oder bei welcher der Bearbeitungslaserstrahl nicht gepulst ist.

13. Verfahren nach einem der Ansprüche 11 oder 12,
bei welchem der Anregungslaserstrahl gepulst ist und eine Pulsdauer von höchstens 1 ns, bevorzugt 0,1 bis 10 ps aufweist
oder bei welchem der Anregungslaserstrahl gepulst ist und eine Pulsenergie von höchstens 1 mJ aufweist
oder bei welchem der Anregungslaserstrahl gepulst ist und eine Spitzenleistung von mindestens 100 kW aufweist
oder bei welchem der Anregungslaserstrahl gepulst ist und eine Repetitionsrate von mehr als 10 kHz, bevorzugt zwischen 0,1 und 1 MHz aufweist.

14. Verfahren nach einem der Ansprüche 11 bis 13,
bei welchem der Überlapp relativ zum Werkstück entlang eines vorgegebenen Pfads geführt wird.

15. Verfahren nach einem der Ansprüche 11 bis 14,
bei welchem während eines räumlichen und zeitlichen Zusammentreffens von dem Licht des Anregungslaserstrahls mit dem Licht des Bearbeitungslaserstrahls eine kritische Elektronendichte im Material überschritten wird, ab welcher das Material eine bleibende Materialveränderung erfährt.
